# EUROPÄISCHE PATENTSCHRIFT

(11) **EP 4 533 042 B1**
(45) Veröffentlichungstag und Bekanntmachung des Hinweises auf die Patenterteilung: **09.12.2026**
(21) Anmeldenummer: 23730402.7
(22) Anmeldetag: 31.05.2023
(51) Int. Cl.: G01F 15/18, G01F 1/84

(54) **MODULARES CORIOLIS-DURCHFLUSSMESSGERÄT**
MODULAR CORIOLIS FLOWMETER
DÉBITMÈTRE MODULAIRE À EFFET CORIOLIS

(30) Priorität: 01.06.2022 DE 102022113872
(43) Veröffentlichungstag der Anmeldung: 09.04.2025
(73) Patentinhaber: Endress+Hauser Flowtec AG, 4153 Reinach (CH)
(72) Erfinder: WERNER, Marc, 79639 Grenzach-Wyhlen (DE); SCHWENTER, Benjamin, 4107 Ettingen (CH)
(74) Vertreter: Endress + Hauser Group Services (Deutschland) AG+Co. KG
(86) Internationale Anmeldenummer: PCT/EP2023/064476
(87) Internationale Veröffentlichungsnummer: WO 2023/232833

(56) Entgegenhaltungen:
- EP-A2- 2 053 365
- DE-A1- 102019 134 606
- DE-A1- 102019 135 303
- DE-A1- 102020 114 518
- DE-A1- 102020 127 356
- US-B2- 10 209 113

## Beschreibung

Die Erfindung betrifft ein modulares Coriolis-Durchflussmessgerät zum Bestimmen einer Prozessgröße eines fließfähigen Mediums.

Feldgeräte der Prozessmesstechnik mit einem Messaufnehmer vom Vibrationstyp und besonders Coriolis-Durchflussmessgeräte sind seit vielen Jahren bekannt. Der grundsätzliche Aufbau eines solchen Messgerätes wird beispielsweise in der DE 10 2020 114518 A1 oder der EP 1 807 681 A1 beschrieben.

Typischerweise weisen Coriolis-Durchflussmessgeräte zumindest ein oder mehrere schwingfähige Messrohre auf, welche mittels eines Schwingungs-erregers in Schwingung versetzt werden können. Diese Schwingungen übertragen sich über die Rohrlänge und werden durch die Art des im Messrohr befindlichen fließfähigen Mediums und dessen Durchflussgeschwindigkeit variiert. Ein Schwingungssensor oder insbesondere zwei voneinander beabstandete Schwingungssensoren können an einer anderen Stelle des Messrohres die variierten Schwingungen in Form eines Messsignals oder mehrerer Messsignale aufnehmen. Aus dem oder den Messsignalen kann eine Auswerteeinheit sodann den Massedurchfluss, die Viskosität und/oder die Dichte des Mediums ermitteln.

Die Messrohre sind üblicherweise über ein Verteilerstück mit dem Gehäuse verbunden.

Dabei sind die drei genannten Komponenten miteinander verschweißt. Es sind jedoch auch Coriolis-Durchflussmessgeräte mit austauschbaren Einweg-Messrohranordnungen bekannt. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen Verbindungskörper, welcher dazu eingerichtet ist, eine auswechselbare Messrohrmodul, umfassend dünnwandige Kunststoffrohre, aufzunehmen und zu stützen. Die Befestigung der Messrohrmodul in einer mit den notwendigen Erregern und Sensoren ausgestatteten Trägervorrichtung erfolgt über den Verbindungskörper.

Die mechanischen Eigenschaften der Messrohrmodule können stark variieren, daher müssen spezifische Kenngrößen wie Kalibrationsfaktor und Nullpunkt des modularen Messrohrmoduls vor dem Einsatz ermittelt werden. Es hat sich herausgestellt, dass der im Justierverfahren bestimmte Nullpunkt von den im Einsatz tatsächlich vorliegenden Nullpunkt abweichen kann.

Der Erfindung liegt die Aufgabe zugrunde Einflüsse auf den Nullpunkt zu reduzieren.

Die Aufgabe wird gelöst durch das modulare Coriolis-Durchflussmessgerät nach Anspruch 1 und das Verfahren zum Auslegen des Messrohrmoduls nach Anspruch 12 gelöst.

Das erfindungsgemäße modulare Coriolis-Durchflussmessgerät zum Bestimmen einer Prozessgröße eines fließfähigen Mediums, umfasst:
- ein Messrohrmodul, umfassend:
   -- mindestens ein Messrohr zum Führen des Mediums;
   -- eine primäre Erregerkomponente;
   -- eine primäre Sensorkomponente;
   -- einen Anschlusskörper zum lösbaren Verbinden des Messrohrmoduls mit einer Prozessleitung;
   -- einen Verbindungskörper zum Verbinden des mindestens einen Messrohres mit dem Anschlusskörper,
      wobei der Verbindungskörper mit dem mindestens einen Messrohr, insbesondere stoffschlüssig, verbunden ist;
- ein Trägermodul, umfassend:
   -- eine Aufnahme zum lösbaren Befestigen des Messrohrmoduls im Trägermodul,
   -- eine zur primären Erregerkomponente komplementären sekundären Erregerkomponente,
   -- eine zur primären Sensorkomponente komplementären sekundären Sensorkomponente,
dadurch gekennzeichnet,
dass der Verbindungskörper einen Verbindungskörperkontaktabschnitt aufweist, welcher bei einer Anregung des mindestens einen Messrohres mit einer mechanischen Schwingung eine Auslenkung von kleiner 1 ‰, insbesondere kleiner 0,1 ‰, und bevorzugt kleiner 0,01 ‰, relativ zu einer maximalen Auslenkung des mindestens einen Messrohres aufweist, und
dass der Anschlusskörper und der Verbindungskörper derart ausgestaltet sind, dass ein mechanischer Kontakt zwischen dem Anschlusskörper und dem Verbindungskörper, ausschließlich, innerhalb des Verbindungskörperkontaktabschnittes erfolgt.

Ein Vorteil des modularen Coriolis-Durchflussmessgerätes ist die Auswechselbarkeit des Messrohrmoduls und gleichzeitig die Wiederverwendbarkeit des Trägermoduls, in welchem üblicherweise die Mess- und Auswerteelektronik (mit entsprechenden Prozessor) zum Betreiben des Coriolis-Durchflussmessgerätes und zum Auswerten der Messsignale und alternativ auch eine Display zum Ausgeben der Messergebnisse untergebracht sind. Somit ist das modulare Coriolis-Durchflussmessgerät ideal für Single-Use Anwendungen in Bio- und/oder Pharma-Prozessanlagen geeignet.

Die einzelnen Module des modularen Coriolis-Durchflussmessgerätes lassen sich über form- und/oder kraftschlüssige Verbindungen miteinander verbinden, die sich wieder durch den Bediener des modularen Coriolis-Durchflussmessgerätes einfach und insbesondere werkzeuglos lösen lassen. Dafür kann am Trägermodul eine Befestigungsvorrichtung vorgesehen sein, die dazu eingerichtet ist, das Messrohrmodul in der Aufnahme lösbar zu befestigen.

Bei dem Verbindungskörper handelt es sich um die Schnittstelle zwischen Messrohr bzw. Messrohre und Anschlusskörper. Die Art und Weise wie der Verbindungskörper mit dem Anschlusskörper in Wirkung bzw. in Kontakt steht hat einen Einfluss auf den Nullpunkt des modularen Coriolis-Durchflussmessgerätes. Zur Lösung der Aufgabe wird sichergestellt, dass der Kontakt zwischen Verbindungskörper und Anschlusskörper klar definiert ist und nur die Abschnitte des Verbindungskörper in Kontakt mit dem Anschlusskörper stehen, die bei einem Schwingen des Messrohres bzw. der Messrohre eine Auslenkung unterhalb eines tolerierbaren Grenzwertes erfahren. Der Grenzwert definiert eine Auslenkung von kleiner 1 ‰, insbesondere kleiner 0,1 ‰, und bevorzugt kleiner 0,01 ‰, relativ zu einer maximalen Auslenkung des mindestens einen Messrohres.

Der Anschlusskörper übernimmt die Aufgabe das mindestens eine Messrohr mit der Prozessleitung zu verbinden. Bei dem Anschlusskörper kann es sich bei Verwendung von mehr als einem Messrohr daher um ein Verteilerstück handeln. Alternativ übernimmt der Anschlusskörper die Funktion eines Anschlussadapters.

Erfindungsgemäß weist der Anschlusskörper zumindest eine erste Kontaktfläche auf, welche in Kontakt mit dem Verbindungskörperkontaktabschnitt steht.

Ein permanenter Kontakt erfolgt somit über die erste Kontaktfläche. Diese ist nicht zwingend zusammenhängend und kann daher auch aus mehreren Teilflächen zusammengesetzt sein.

Erfindungsgemäß ist vorgesehen, dass der Anschlusskörper eine Erhebung aufweist, welche die erste Kontaktfläche umfasst.

Für eine definierte Kontaktstelle mit vorherbestimmten Kontaktflächen zwischen Anschlusskörper und Verbindungskörper ist gemäß der Ausgestaltung eine Erhebung an der dem Verbindungskörper zugewandten Seite des Abschlusskörpers vorgesehen. Diese Erhebung kann die gesamte erste Kontaktfläche aufweisen. Das Vorsehen der Erhebung führt dazu, dass sich zwischen Verbindungskörper und Anschlusskörper ein vordefinierter Spalt ausbildet, der verhindert, dass kritische Bereich des Verbindungskörpers in Kontakt mit dem Anschlusskörper kommen.

Alternativ ist vorgesehen, dass der Anschlusskörper eine Vielzahl an Erhebungen aufweist, welche jeweils eine Teilfläche der ersten Kontaktfläche umfassen.

Alternativ zur vorhergehenden Ausgestaltung können auch eine Vielzahl an Erhebungen an einer dem Verbindungskörper zugewandten Seite des Anschlusskörpers vorgesehen werden, über die der permanenten Kontakt zwischen Anschlusskörper und Verbindungskörper gebildet wird. In dem Fall teilt sich die erste Kontaktfläche auf die Vielzahl an Erhebungen auf.

Vorteilhafte Ausgestaltung der Erfindung sind Gegenstand der Unteransprüche.

Eine Ausgestaltung sieht vor, dass die mechanische Schwingung eine Schwingfrequenz kleiner 1000 Hz und größer 100 Hz, insbesondere kleiner 750 Hz und größer 150 Hz und bevorzugt kleiner 500 Hz und größer 200 Hz aufweist.

Eine Ausgestaltung sieht vor, dass die erste Kontaktfläche einen Flächenanteil von maximal 10%, insbesondere maximal 5% und bevorzugt maximal 3% relativ zu einer gesamten Projektionsfläche annimmt, die sich aus einer Orthogonalprojektion aller Querschnittsebenen durch den Anschlusskörper auf eine Projektionsebene ergibt.

Der Anschlusskörper muss nicht zwingend massiv ausgebildet sein. Gerade bei Spritzteilen ist es vorteilhaft, wenn das gespritzte Teil zumindest abschnittsweise hohl und mit einer im Wesentlichen konstanten Wandstärke ausgebildet ist. Die Querschnittsfläche des Anschlusskörpers ist daher durch die Fläche definiert, die durch eine äußere Umrandung des Anschlusskörpers eingeschlossen ist. Dies entspricht der Projektionsfläche, die sich aus der Orthogonalprojektion aller Querschnittsebenen ergibt, die durch den Anschlusskörper verlaufen.

Eine Ausgestaltung sieht vor, dass das mindestens eine Messrohr gebogen ausgebildet ist,
wobei das mindestens eine Messrohr einen gerade ausgebildeten Einlaufbereich und einen gerade ausgebildeten Auslaufbereich aufweist,
wobei der Verbindungskörper zwei Verbindungskörperöffnungen aufweist,
wobei sich das mindestens eine Messrohr im Einlaufbereich und im Auslaufbereich jeweils durch eine der zwei Verbindungskörperöffnungen erstreckt,
wobei das mindestens eine Messrohr im Einlaufbereich und im Auslaufbereich jeweils eine Längsachse aufweist,
wobei zwei parallel zueinander verlaufende Ebenen einen Bereich auf dem Verbindungskörper eingrenzen in dem sich der Verbindungskörperkontaktabschnitt, insbesondere die erste Kontaktfläche befindet,
wobei die Längsachsen jeweils in einer der beiden Ebenen liegen.

Eine Ausgestaltung sieht vor, dass der Anschlusskörper eine zweite Kontaktfläche aufweist, welche nur dann in Kontakt mit dem Verbindungskörperkontaktabschnitt steht, wenn ein Medium, insbesondere mit einer Durchflussgeschwindigkeit von mindestens 1 m/s und/oder mit einem Mediumsdruck von grösser als 1 bar, insbesondere größer als 2 bar durch einen Anschlusskörperkanal des Anschlusskörper fließt.

Gemäß der Ausgestaltung sind weitere Kontaktstellen vorgesehen, die jedoch nicht permanent in Kontakt mit dem Verbindungskörper vorliegen, sondern nur dann, wenn Medium durch den Anschlusskörper fließt. Ansonsten ist auch die zweite Kontaktfläche zur dem Anschlusskörper zugeneigten Seite des Verbindungskörpers beabstandet.

Eine Ausgestaltung sieht vor, dass das mindestens eine Messrohr gebogen ausgebildet ist,
wobei das mindestens eine Messrohr einen gerade ausgebildeten Einlaufbereich und einen gerade ausgebildeten Auslaufbereich aufweist,
wobei der Verbindungskörper zwei Verbindungskörperöffnungen aufweist,
wobei sich das mindestens eine Messrohr im Einlaufbereich und im Auslaufbereich jeweils durch eine der zwei Verbindungskörperöffnungen erstreckt,
wobei das mindestens eine Messrohr im Einlaufbereich und im Auslaufbereich jeweils eine Längsachse aufweist,
wobei zwei parallel zueinander verlaufende Ebenen einen Bereich auf dem Verbindungskörper ausgrenzen in dem sich die zweite Kontaktfläche befindet,
wobei die Längsachsen jeweils in einer der beiden Ebenen liegen.

Eine Ausgestaltung sieht vor, dass das Messrohrmodul mindestens ein Dichtmittel aufweist, welches zumindest abschnittsweise zwischen dem Anschlusskörper und dem Verbindungskörper angeordnet ist,
wobei das Dichtmittel derart ausgestaltet ist, dass der Verbindungskörper und der Anschlusskörper, insbesondere eine untere dem Anschlusskörper zugeneigten Verbindungskörperfläche und eine dem Verbindungskörper zugeneigte Anschlusskörperfläche zumindest abschnittsweise beabstandet sind.

Das Dichtmittel ist zwischen Verbindungskörper und Anschlusskörper eingespannt und verhindert ein Austreten des Mediums an der Schnittstelle zwischen Messrohr und Anschlusskörper. Das Dichtmittel ist derart dimensioniert, dass der Anschlusskörper zum Verbindungskörper bis auf vordefinierte Kontaktflächen beabstandet ist. Es bildet sich somit ein definierter Spalt zwischen Verbindungskörper und Anschlusskörper aus.

Eine Ausgestaltung sieht vor, dass der Anschlusskörper mittels mindestens eines Befestigungsmittels mit dem Verbindungskörper, insbesondere kraft- und/oder formschlüssig, verbunden ist.

Als Befestigungsmittel eignen sich beispielsweise die in der PCT/EP2021/083119 oder DE 102020131563.5 gelehrten Befestigungsmittel. Auf die genannten beiden Patentschriften wird vollumfänglich Bezug genommen.

Eine Ausgestaltung sieht vor, dass die erste Kontaktfläche derart ausgebildet ist, dass sie eine Befestigungsmittelfläche umschließt,
wobei durch die Befestigungsmittelfläche das Befestigungsmittel verläuft.

Entsprechend der Ausgestaltung kann die erste Kontaktfläche bzw. eine entsprechende Teilfläche der ersten Kontaktfläche ringförmig ausgebildet sein.

Eine Ausgestaltung sieht vor, dass das Messrohrmodul mindestens ein Kontaktmittel aufweist, welches zwischen dem Verbindungskörper und dem Anschlusskörper angeordnet ist und den mechanischen Kontakt vermittelt.

Anstelle einer Erhebung bzw. Erhebungen am Anschlusskörper und/oder am Verbindungskörper können separate abstandsbildende Teile oder Kontaktmittel zwischen dem Verbindungskörper und dem Anschlusskörper angeordnet sein. Diese können stoffschlüssig mit dem Anschlusskörper und/oder dem Verbindungskörper verbunden sein oder form- und/oder kraftschlüssig zwischen den beiden Körpern angeordnet sein.

Eine Ausgestaltung sieht vor, dass das Messrohrmodul ein erstes, insbesondere gebogenes Messrohr umfasst,
wobei das Messrohrmodul ein zweites, insbesondere gebogenes Messrohr umfasst,
wobei der Verbindungskörper zwei Verbindungskörperöffnungen aufweist, durch welche sich das erste Messrohr erstreckt,
wobei der Verbindungskörper zwei weitere Verbindungskörperöffnungen aufweist durch welche sich das zweite Messrohr erstreckt.

Eine Ausgestaltung sieht vor, dass der Verbindungskörper einen weiteren Verbindungskörperkontaktabschnitt aufweist, welcher bei der Anregung des mindestens einen Messrohres mit der mechanischen Schwingung eine Auslenkung von größer 1 ‰, insbesondere größer 0,1 ‰, und bevorzugt größer 0,01 ‰, relativ zu der maximalen Auslenkung aufweist,
wobei der Anschlusskörper und der Verbindungskörper derart ausgestaltet sind, dass kein mechanischer Kontakt zwischen dem Anschlusskörper und dem Verbindungskörper innerhalb des Verbindungskörperkontaktabschnittes erfolgt.

Das erfindungsgemäße Verfahren zum Auslegen eines Messrohrmoduls zum Einsatz in einem modularen Coriolis-Durchflussmessgerätes, insbesondere in dem erfindungsgemäßen modularen Coriolis-Durchflussmessgerät, wobei das Messrohrmodul mindestens ein Messrohr, einen Anschlusskörper zum lösbaren Verbinden des Messrohrmoduls mit einer Prozessleitung und einen Verbindungskörper zum Verbinden des mindestens einen Messrohres mit dem Anschlusskörper umfasst, umfasst die Verfahrensschritte:
- Ermitteln der Auslenkung des Verbindungskörpers bei einer mechanischen Schwingung des mindestens einen Messrohres;
- Ermitteln eines Verbindungskörperkontaktabschnittes,
   wobei die Auslenkung des Verbindungskörpers im Verbindungskörperkontaktabschnitt kleiner 1 ‰, insbesondere kleiner 0,1 ‰, und bevorzugt kleiner 0,01 ‰, relativ zu einer maximalen Auslenkung des mindestens einen Messrohres ist; und
- Verbinden des Anschlusskörpers mit dem Verbindungskörper und dem mindestens einen Messrohr derart, dass ein mechanischer Kontakt zwischen dem Anschlusskörper und dem Verbindungskörper, insbesondere ausschließlich, innerhalb des Verbindungskörperkontaktabschnittes erfolgt.

Für einen stabileren Nullpunkt - das ist der Wert, der bei keinem oder einem stehenden Medium vorliegt - ist es besonders wichtig, das Schwingverhalten des Verbindungskörpers zuvor zu bestimmen. Ist das Schwingverhalten bekannt, lassen sich die Flächen des Verbindungskörpers bestimmen, die bei einer Anregung eine Schwingungsamplitude kleiner 1 ‰, insbesondere kleiner 0,1 ‰, und bevorzugt kleiner 0,01 ‰, relativ zu einer maximalen Auslenkung des mindestens einen Messrohres aufweisen. Sind diese bekannt muss dies beim Auslegen des Anschlusskörpers und/oder des Verbindungskörpers berücksichtigt werden. Beim Verbinden des Anschlusskörpers mit dem Messrohr bzw. den Messrohren muss sichergestellt werden, dass ein mechanischer Kontakt ausschließlich innerhalb der ermittelten Flächen erfolgt.

Es kann zusätzlich ein Verfahrensschritt vorgesehen sein, in dem der Anschlusskörper derart gebildet wird, dass beim Anordnen des Anschlusskörpers an das Messrohr und den Verbindungskörper ein mechanischer Kontakt nur zwischen den zuvor ermittelten und bestimmten Flächen erfolgt.

Erfindungsgemäß ist im Verfahren vorgesehen, dass die mechanische Schwingung eine Schwingfrequenz kleiner 1000 Hz und größer 100 Hz, insbesondere kleiner 750 Hz und größer 150 Hz und bevorzugt kleiner 500 Hz und größer 200 Hz aufweist.

Eine Ausgestaltung sieht vor, dass für das Ermitteln der Auslenkung des Verbindungskörpers das Messrohrmodul in einer Aufnahme eines Trägermoduls des Coriolis-Durchflussmessgerätes angeordnet ist.

Eine Ausgestaltung sieht vor, dass für das Ermitteln der Auslenkung des Verbindungskörpers eine definierte Vorspannkraft auf das Messrohrmodul, insbesondere auf den Verbindungskörper aufgeprägt ist.

Eine Ausgestaltung sieht vor, dass das Ermitteln der Auslenkung des Verbindungskörpers für ein Messrohrmodul ohne Anschlusskörper erfolgt.

Eine Ausgestaltung sieht vor, dass das Ermitteln der Auslenkung des Verbindungskörpers mittels eines Simulationsverfahrens erfolgt.

Eine Ausgestaltung sieht vor, dass das Simulationsverfahren Finite-Elemente Berechnungen umfasst.

Die Erfindung wird anhand der nachfolgenden Figuren näher erläutert. Es zeigt:
Fig. 1: ein perspektivische Ansicht auf ein modulares Coriolis-Durchflussmessgerät;
Fig. 2: eine technische Simulation des Schwingverhaltens des Verbindungskörpers bei Anregung der beiden Messrohre in Schwingungen;
Fig. 3: eine perspektivische Ansicht auf die Unterseite eines Anschlusskörpers;
Fig. 4: eine Detailansicht auf einen Querschnitt durch einen Anschlusskörper und einen Verbindungskörper; und
Fig. 5: eine Verfahrenskette einer erfindungsgemäßen Ausgestaltung des Verfahrens zum Auslegen eines Messrohrmoduls zum Einsatz in einem modularen Coriolis-Durchflussmessgerät.

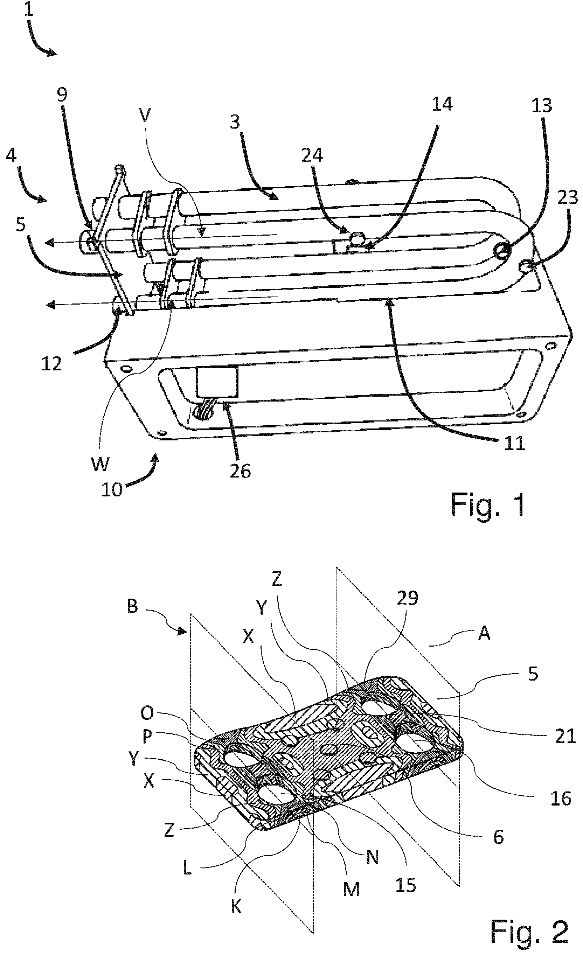

Die Fig. 1 zeigt ein perspektivische Ansicht auf ein modulares Coriolis-Durchflussmessgerät zum Bestimmen einer Prozessgröße eines fließfähigen Mediums. Bei den Prozessgrößen handelt es sich üblicherweise um den Massefluss, der Dichte und/oder Viskosität des Mediums. Das modulare Coriolis-Durchflussmessgerät 1 umfasst ein Messrohrmodul 4 und ein Trägermodul 10. Das Messrohrmodul 4 ist als auswechselbares Wegwerfteil konzipiert, während das Trägermodul 10 als ein Mehrwegteil eingesetzt wird. Dafür ist das Messrohrmodul 4 mechanisch lösbar mit dem Trägermodul 10 verbindbar. Das Messrohrmodul 4 umfasst mindestens ein Messrohr 3 zum Führen des Mediums, welches einen Einlaufbereich 9 und einen Auslaufbereich 12 aufweist. Das mindestens eine Messrohr 3 kann aus einem Metall, einem Kunststoff und/oder einem Glas gebildet sein. In der abgebildeten Ausgestaltung umfasst das Messrohrmodul 4 genau zwei gebogene metallische Messrohre mit jeweils einem geradlinigen Einlaufbereich 9 und einen geradlinigen Auslaufbereich 12. Dabei befindet sich der gebogene Teilabschnitt in Fließrichtung zwischen dem Einlaufbereich 9 und dem Auslaufbereich 12. Alternativ kann das Messrohrmodul 4 auch nur genau ein gebogenes Messrohr umfassen. Die Einlaufabschnitte der beiden Messrohre sind miteinander über mindestens einen Koppler - im abgebildeten Fall sind es genau zwei planare Koppler - verbunden. Gleiches gilt auch für die Auslaufabschnitte der beiden Messrohre.

An den Messrohren sind jeweils eine primäre Erregerkomponente 23 und mindestens eine primäre Sensorkomponente 24 angebracht. Bei der primären Erregerkomponente 23 kann es sich beispielsweise um einen Permanentmagneten handeln, welcher an einer Mantelfläche des Messrohres angebracht ist. Bei der primären Sensorkomponente 24 kann es sich ebenfalls um einen Permanentmagneten handeln. Die abgebildeten Messrohre weisen jeweils genau zwei primäre Sensorkomponenten 24 pro Messrohr auf, welche jeweils in einem geradlinig verlaufenden Teilabschnitt des Messrohres angeordnet sind, während die primäre Erregerkomponente 23 jeweils in einem gebogenen Teilabschnitt des Messrohres angeordnet sind.

Das Messrohrmodul 4 umfasst weiterhin einen Verbindungskörper 5 zum Verbinden der beiden Messrohre mit einem Anschlusskörper (nicht abgebildet). Der Anschlusskörper ist dazu eingerichtet das Messrohrmoduls 4, insbesondere den Einlaufbereich 9 und den Auslaufbereich 12 des jeweiligen Messrohres, mit einer Prozessleitung (nicht abgebildet), insbesondere lösbar, zu verbinden. Der Verbindungskörper 5 ist mit dem mindestens einen Messrohr 3 stoffschlüssig verbunden und als ein separates Bauteil zum Anschlusskörper zu verstehen. Daher sind Verbindungskörper 5 und Anschlusskörper zumindest zweiteilig ausgebildet. Alternativ kann der Verbindungskörper kraft- und/oder formschlüssig mit dem mindestens einen Messrohr 3 verbunden sein. In der abgebildeten Ausgestaltung ist der plattenförmige Verbindungskörper 5 metallisch, planar ausgestaltet und mit den beiden Messrohren verbunden. Der Verbindungskörper 5 weist vier Verbindungskörperöffnungen 15, 16 auf, durch welche sich jeweils die geradlinig ausgebildeten Einlauf- und Auslaufabschnitte der beiden Messrohr erstrecken. Die stoffschlüssigen Verbindungen an den entsprechenden Verbindungskörperöffnungen 15, 16 zwischen dem Verbindungskörper und den Messrohren sind durch eine Schweißverbindung realisiert. Es sind auch alternative Verbindungsmöglichkeiten bekannt. So kann die Verbindung auch über eine Klebeverbindung, Schmelzverbindung, Schraubverbindung, (Ultraschall-)Nietverbindung realisiert sein.

Das Trägermodul 10 umfasst eine Aufnahme 11 zum lösbaren Befestigen des Messrohrmoduls 4 im Trägermodul 10. Die Aufnahme 11 wird durch mindestens vier Wandungen begrenzt. In der abgebildeten Ausgestaltung grenzen das Aufnahmevolumen der Aufnahme 11 genau vier Wandungen ein. Die Aufnahme 11 kann eine Nut aufweise, in welche der Verbindungskörper 5 zumindest abschnittsweise einschiebbar ist. Alternativ kann das Trägermodul 10 eine Aufnahmefläche aufweisen, auf welche der Verbindungskörper im eingebauten Zustand des Messrohrmoduls 4 aufliegt. Gemäß einer nicht abgebildeten Variante kann die Aufnahme 11 durch genau fünf Wandungen begrenzt sein. So lässt sich das Messrohrmodul 4 in die Aufnahme 11 einführen und dort über eine Befestigungsvorrichtung (nicht abgebildet) fixieren. In der abgebildeten Ausgestaltung ist die Montagerichtung des Messrohrmoduls 4 senkrecht zur Längsachse des Messrohrmoduls 4 und ebenfalls zur Längsachse der Aufnahme 11. Alternativ können die Aufnahme 11 und das Trägermodul 10 derart ausgebildet sein, dass die Montagerichtung des Messrohrmoduls 4 parallel zur Längsachse des Messrohrmoduls 4 und auch zur Längsachse der Aufnahme 11 orientiert sind. Das Trägermodul 10 ist vorzugsweise aus einem korrosionsbeständigen Metall oder einem Kunststoff hergestellt. In dem Trägermodul 10 sind mindestens eine zur primären Erregerkomponente 23 komplementäre sekundäre Erregerkomponente 13 und mindestens eine zur primären Sensorkomponente 24 komplementäre sekundäre Sensorkomponente 14 angeordnet. Sind zwei primäre Sensorkomponenten pro Messrohr vorgesehen, so sind ebenfalls zwei sekundäre Sensorkomponenten pro Messrohr vorgesehen. Alternativ kann bei einer Anordnung der sekundären Erregerkomponente 13 und der sekundären Sensorkomponente 14 zwischen den beiden Messrohren auch genau eine sekundäre Erregerkomponente 13 für zwei primäre Erregerkomponenten 23 und genau eine sekundäre Sensorkomponente 13 entsprechend für zwei primäre Sensorkomponenten 23 vorgesehen sein. Unabhängig davon ist die sekundäre Sensorkomponente 14 derart am Trägermodul 10 angeordnet, dass bei Anordnung des Messrohrmoduls 4 in der Aufnahme 11 die primäre Sensorkomponente 24 in, insbesondere magnetischer, Wirkung mit der sekundären Sensorkomponente 14 steht. Die sekundäre Erregerkomponente 13 ist am Trägermodul 10 derart angeordnet, dass bei Anordnung des Messrohrmoduls 4 in der Aufnahme 11 die primäre Erregerkomponente 23 in, insbesondere magnetischer, Wirkung mit der sekundären Erregerkomponente 13 steht. Als sekundäre Sensorkomponente 14 und sekundäre Erregerkomponente 13 eignen sich jeweils eine Spule. Die sekundäre Sensorkomponente 14 und die sekundäre Erregerkomponente 13 sind elektrisch mit der Steuereinheit 26 verbunden und werden von dieser gesteuert bzw. stellen dieser Messwerte zur Verfügung. Die Steuereinheit 26 ist dazu geeignet und eingerichtet, ermittelte Messwerte zu verarbeiten und auszuwerten. Dafür weist die Steuereinheit 26 zumindest einen Prozessor und elektronische Bauteile auf.

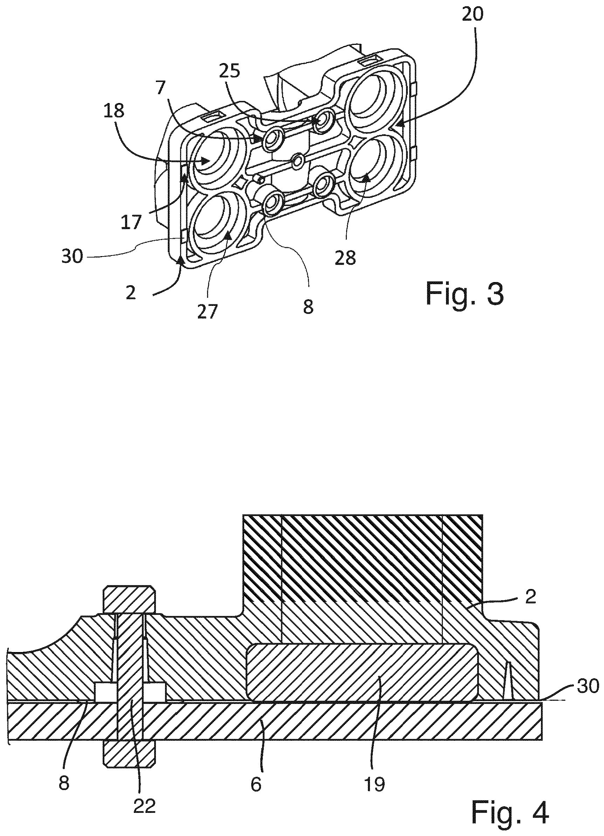

Die Fig. 2 zeigt eine technische Simulation des Schwingverhaltens eines - abgesehen von den abgerundeten Ecken - im Wesentlichen quaderförmigen Verbindungskörpers 5 bei Anregung der beiden Messrohre in Schwingungen. Die Messrohre wurden für die Simulation berücksichtigt, sind jedoch zur Erläuterung der Erfindung nicht abgebildet. Dafür sind jedoch die Verbindungskörperöffnungen 15, 16 dargestellt. Dabei ist der Verbindungskörper 5 graphisch in mehrere Teilabschnitte K, L, M, N, O, P, X, Y und Z eingeteilt, die sich jeweils durch unterschiedliche Auslenkungen des Verbindungskörpers 5 unterscheiden. Teilabschnitte mit identischer Musterung sind einem gleichen Buchstaben (K, L, M, N, O, P, X, Y, Z) zugeordnet bzw. zuzuordnen. Erfindungsgemäß weist der Verbindungskörper 5 einen Verbindungskörperkontaktabschnitt 6 auf, welcher bei einer Anregung des mindestens einen Messrohres 3 mit einer mechanischen Schwingung eine Auslenkung von kleiner 1 ‰, insbesondere kleiner 0,1 ‰, und bevorzugt kleiner 0,01 ‰, relativ zu einer maximalen Auslenkung des mindestens einen Messrohres aufweist. Der Verbindungskörperkontaktabschnitt 6 befindet sich somit - gemäß der abgebildeten Ausgestaltung - innerhalb der Teilabschnitte mit den Buchstaben X, Y und Z. Dabei weist die mechanische Schwingung eine Schwingfrequenz kleiner 1000 Hz und größer 100 Hz, insbesondere kleiner 750 Hz und größer 150 Hz und bevorzugt kleiner 500 Hz und größer 200 Hz auf. Der Anschlusskörper (siehe **Fig. 3****)** und der Verbindungskörper 5 sind zwei separate Bauteile und erfindungsgemäß derart ausgestaltet, dass ein mechanischer Kontakt zwischen dem Anschlusskörper und dem Verbindungskörper 5, insbesondere ausschließlich, innerhalb des Verbindungskörperkontaktabschnittes 6 erfolgt. Das heißt für die abgebildete Ausgestaltung, dass ein Kontakt zwischen dem Verbindungskörper 5 und der Anschlusskörper ausschließlich in den Teilabschnitten X, Y und/oder Z erfolgt. Das mindestens eine Messrohr weist bzw. die zwei Messrohre weisen jeweils im Einlaufbereich und im Auslaufbereich eine Längsachse V, W auf. Zwei parallel zueinander verlaufende Ebenen A, B grenzen einen Bereich auf dem Verbindungskörper 5 ein, in dem sich der Verbindungskörperkontaktabschnitt 6, insbesondere die erste Kontaktfläche befindet. Dabei liegen die Längsachsen V, W jeweils in einer der beiden Ebenen A, B. Unabhängig von der ersten Kontaktfläche können weitere Kontaktstellen vorgesehen sein. So können die zwei parallel zueinander verlaufende Ebenen A, B zudem einen Bereich auf dem Verbindungskörper 5 ausgrenzen in dem sich eine zweite Kontaktfläche befindet. Das heißt, dass die zweite Kontaktfläche außerhalb des von den beiden Ebenen A, B eingegrenzten Bereiches liegen. Der Anschlusskörper steht demnach nur dann in Kontakt mit dem Verbindungskörperkontaktabschnitt 6, wenn ein Medium, insbesondere mit einer Durchflussgeschwindigkeit von mindestens 1 m/s und/oder mit einem Mediumsdruck von grösser als 1 bar, insbesondere größer als 2 bar durch einen Anschlusskörperkanal 18 des Anschlusskörpers 2 fließt. Weiterhin ist verlangt, dass der Verbindungskörper 5 einen Verbindungskörperabschnitt 29 aufweist, welcher bei der Anregung des mindestens einen Messrohres mit der mechanischen Schwingung eine Auslenkung von größer 1 ‰, insbesondere größer 0,1 ‰, und bevorzugt größer 0,01 ‰, relativ zu der maximalen Auslenkung aufweist. Der Anschlusskörper und der Verbindungskörper 5 sind derart ausgestaltet, dass kein mechanischer Kontakt zwischen dem Anschlusskörper und dem Verbindungskörper 5 innerhalb des Verbindungskörperabschnittes 29 erfolgt. Dies sind in der abgebildeten Ausgestaltung die Teilabschnitte mit den Buchstaben K, L, M, N, O und P.

Nicht in Fig. 1 und Fig. 2, jedoch in Fig. 3 abgebildet ist ein Anschlusskörper 2. Die Fig. 3 zeigt eine perspektivische Ansicht auf die Unterseite den erfindungsgemäßen Anschlusskörper 2. Der Anschlusskörper 2 kann als Verteilerstück ausgebildet sein. Der Anschlusskörper 2 weist mindestens zwei Anschlusskörperöffnungen 27, 28 auf durch welche sich die entsprechenden Einlaufabschnitte und Auslaufabschnitte des mindestens einen Messrohres erstrecken. In der abgebildeten Ausgestaltung mit genau zwei Messrohren weist der Anschlusskörper 2 genau vier Anschlussöffnungen auf. Der Anschlusskörper 2 weist einen Anschlusskörperkanal 18 auf, durch welchen das Medium fließt. Der Anschlusskörperkanal 18 ist mit dem mindestens einen Messrohr 3 verbunden bzw. verbindbar. Der Anschlusskörper 2 kann Metall, Glas und/oder Kunststoff umfassen.

Der Anschlusskörper 2 weist zumindest die erste Kontaktfläche 7 auf, welche in Kontakt mit dem erfindungsgemäß Verbindungskörperkontaktabschnitt des Verbindungskörpers (siehe Fig. 2) steht. Die erste Kontaktfläche 7 nimmt einen Flächenanteil von maximal 10%, insbesondere maximal 5% und bevorzugt maximal 3% relativ zu einer gesamten Projektionsfläche an, die sich aus einer Orthogonalprojektion aller Querschnittsebenen durch den Anschlusskörper 2 auf eine Projektionsebene ergibt. In der abgebildeten Ausgestaltung weist der Anschlusskörper 2 eine Vielzahl an Erhebungen 8, insbesondere genau vier die erste Kontaktfläche 7 umfassende Erhebungen 8 auf, die mindestens eine zweifache, und insbesondere mindestens eine dreifache, Symmetrie um eine Längsachse des Messrohrmoduls bildend angeordnet sind. Dabei weisen die Vielzahl an Erhebungen 8 jeweils eine Teilfläche der ersten Kontaktfläche 7 auf, welche in der Summe die gesamte erste Kontaktfläche 7 ergibt. Alternativ kann Anschlusskörper 2 auch nur eine Erhebung 8 aufweisen, welche die erste Kontaktfläche 7 umfasst. In der abgebildeten Ausgestaltung besteht die erste Kontaktfläche 7 aus vier ringförmigen Teilkontaktflächen.

Der Anschlusskörper 2 weist zudem die zweite Kontaktfläche 17 auf, welche nur dann in Kontakt mit dem Verbindungskörperkontaktabschnitt 6 steht, wenn ein Medium, insbesondere ein Medium mit einer Durchflussgeschwindigkeit von mindestens 1 m/s und/oder mit einem Mediumsdruck von grösser als 1 bar, insbesondere größer als 2 bar durch den Anschlusskörperkanal 18 fließt. Dafür kann wiederum eine Erhebung 30 oder eine Vielzahl an Erhebungen 30 vorgesehen sein, welche die zweite Kontaktfläche aufweisen. In der abgebildeten Ausgestaltung besteht die zweite Kontaktfläche 17 aus vier quadratischen Teilkontaktflächen.

Die Fig. 4 zeigt eine Detailansicht auf einen Querschnitt durch einen zusammengesetzten Anschlusskörper 2 und Verbindungskörper 6. Der Anschlusskörper 2 ist an dem Verbindungskörper 6 über ein Befestigungsmittel 22 befestigt. Dabei erstreckt sich das Befestigungsmittel 22 durch eine Befestigungsmittelöffnung des Anschlusskörpers 2 und eine Befestigungsmittelöffnung des Verbindungskörpers 6. Zwischen einer dem Verbindungskörper 6 zugewandten Rückfläche des Anschlusskörpers 2 und einer dem Anschlusskörper 2 zugewandten Oberfläche des Verbindungskörpers 6 liegt zumindest abschnittsweise ein Spalt vor, d.h. der Anschlusskörper und der Verbindungskörper sind zumindest abschnittsweise beabstandet zueinander. Die einzigen Kontaktstellen zwischen Anschlusskörper 2 und Verbindungskörper 6 befinden sich auf den Erhebungen 8 des Anschlusskörpers. Alternativ kann auch der Verbindungskörper die Erhöhungen aufweisen. Der Anschlusskörper 2 weist zudem mindestens eine weitere Erhebung 30 auf, die nicht im permanenten Kontakt mit dem Verbindungskörper 6 steht. Ein mechanischer Kontakt zwischen Erhebung 30 und Verbindungskörper 6 erfolgt jedoch nur, wenn ein Medium mit einer Durchflussgeschwindigkeit von mindestens 1 m/s und/oder mit einem Mediumsdruck von grösser als 1 bar, insbesondere größer als 2 bar, durch den Anschlusskörperkanal des Anschlusskörper 2 fließt. In dem Fall verformt sich der Anschlusskörper und die Erhebung 30 kommt in Kontakt mit dem Verbindungskörper 2.

Das Messrohrmodul weist zudem mindestens ein Dichtmittel 19 auf, welches zumindest abschnittsweise zwischen dem Anschlusskörper 2 und dem Verbindungskörper 5 angeordnet ist. Das Dichtmittel 19 ist derart ausgestaltet und dimensioniert, dass der Verbindungskörper 5 und der Anschlusskörper 2, insbesondere die Rückfläche des Anschlusskörpers 2 und die Oberfläche des Verbindungskörpers 6 eine dem Verbindungskörper 5 zumindest abschnittsweise beabstandet sind. Bei dem Dichtmittel 19 kann es sich - wie abgebildet - um einen Dichtring handeln, der in einer Dichtmittelaufnahme des Anschlusskörpers angeordnet ist.

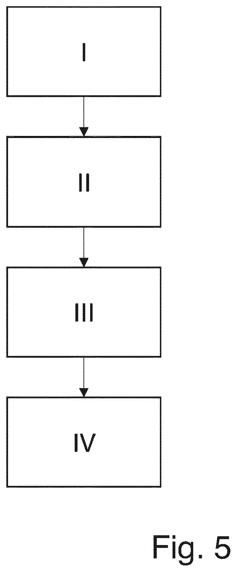

Fig. 5 zeigt eine Verfahrenskette des erfindungsgemäßen Verfahrens zum Auslegen eines Messrohrmoduls zum Einsatz in einem modularen Coriolis-Durchflussmessgerät (siehe Fig. 1 bis 4).

In einem ersten Verfahrensschritt I wird die Auslenkung des Verbindungskörpers bei einer mechanischen Schwingung des mindestens einen Messrohres bestimmt. Dafür wird das Messrohr mit einer Schwingfrequenz kleiner 1000 Hz und größer 100 Hz, insbesondere kleiner 750 Hz und größer 150 Hz und bevorzugt kleiner 500 Hz und größer 200 Hz eingeschwungen. Das Bestimmen des Schwingverhaltens erfolgt mittels eines Simulationsverfahrens. Dafür eignet sich besonders ein Simulationsverfahren, welches auf Finite-Elemente Berechnungen basiert. Ein Beispiel dafür ist in Fig. 2 abgebildet. Die dort verwendete Schwingfrequenz beträgt ca. 303 Hz. Für die Simulation des Schwingverhaltens des Verbindungskörpers wurde das Messrohrmodul in eine Aufnahme des Trägermoduls angeordnet. Dabei wurde der Anschlusskörper weggelassen. Das Messrohrmodul bestand somit ausschließlich aus den zwei Messrohren, den vier Kopplern, den Verbindungskörper, den zwei primären Erregerkomponenten und den vier primären Sensorkomponenten. Zusätzlich wurde eine definierte Vorspannkraft auf das Messrohrmodul aufgeprägt, um die auf das Messrohrmodul wirkende Kräfte beim Fixieren im Trägermodul nachzustellen.

Ist das Schwingverhalten des Verbindungskörpers bekannt, wird in einem zweiten Verfahrensschritt II ein Verbindungskörperkontaktabschnitt bestimmt, bei dem die Auslenkung des Verbindungskörpers kleiner 1 ‰, insbesondere kleiner 0,1 ‰, und bevorzugt kleiner 0,01 ‰, relativ zu einer maximalen Auslenkung des mindestens einen Messrohres ist.

In einem dritten Verfahrensschritt III wird der Anschlusskörper so ausgelegt, dass sichergestellt ist, dass beim Anordnen des Anschlusskörpers an dem Messrohr und dem Verbindungskörper ein mechanischer Kontakt nur innerhalb des ermittelten Verbindungskörperkontaktabschnitt erfolgt.

In einem vierten Verfahrensschritt IV wird der Anschlusskörpers mit dem Verbindungskörper und dem mindestens einen Messrohr derart verbunden, dass der mechanische Kontakt zwischen dem Anschlusskörper und dem Verbindungskörper ausschließlich innerhalb des Verbindungskörperkontaktabschnittes erfolgt.

Alternativ oder zusätzlich kann in einem Verfahrensschritt die Verformung des Anschlusskörpers ermittelt werden, die sich ergibt, wenn ein Medium, insbesondere mit einer Durchflussgeschwindigkeit von mindestens 1 m/s und/oder mit einem Mediumsdruck von grösser als 1 bar, insbesondere größer als 2 bar, durch einen Anschlusskörperkanal des Anschlusskörpers fließt. Ausgehend von der ermittelten Verformung kann eine weitere Auslegung des Anschlusskörpers notwendig sein, durch die sichergestellt ist, dass bei einem Verformen des Anschlusskörpers aufgrund des zu führenden Mediums der sich neu ergebende mechanische Kontakt zwischen Verbindungskörper und Anschlusskörper ebenfalls ausschließlich innerhalb des Verbindungskörperkontaktabschnittes erfolgt.

### Bezugszeichenliste

- 1: modulares Coriolis-Durchflussmessgerät
- 2: Anschlusskörper
- 3: Messrohr
- 4: Messrohrmodul
- 5: Verbindungskörper
- 6: Verbindungskörperkontaktabschnitt
- 7: erste Kontaktfläche
- 8, 30: Erhebung
- 9: Einlaufbereich
- 10: Trägermodul
- 11: Aufnahme
- 12: Auslaufbereich
- 13: sekundäre Erregerkomponente
- 14: sekundäre Sensorkomponente
- 15,16: Verbindungskörperöffnung
- 17: zweite Kontaktfläche
- 18: Anschlusskörperkanal
- 19: Dichtmittel
- 20: Verbindungskörperfläche
- 21: Anschlusskörperfläche
- 22: Befestigungsmittels
- 23: primäre Erregerkomponente
- 24: primäre Sensorkomponente
- 25: Befestigungsmittelfläche
- 26: Steuereinheit
- 27,28: Anschlusskörperöffnung
- A, B: Ebene

## Patentansprüche

1. Modulares Coriolis-Durchflussmessgerät (1) zum Bestimmen einer Prozessgröße eines fließfähigen Mediums, umfassend:
- ein Messrohrmodul (4), umfassend:
- mindestens ein Messrohr (3) zum Führen des Mediums;
- eine primäre Erregerkomponente (23);
- eine primäre Sensorkomponente (24);
- einen Anschlusskörper (2) zum lösbaren Verbinden des Messrohrmoduls (4) mit einer Prozessleitung;
- einen Verbindungskörper (5) zum Verbinden des mindestens einen Messrohres (3) mit dem Anschlusskörper (2),
wobei der Verbindungskörper (5) mit dem mindestens einen Messrohr (3), insbesondere stoffschlüssig, verbunden ist;
- ein Trägermodul (10), umfassend:
- eine Aufnahme (11) zum lösbaren Befestigen des Messrohrmoduls (4) im Trägermodul (10),
- eine zur primären Erregerkomponente (23) komplementären sekundären Erregerkomponente (13),
- eine zur primären Sensorkomponente (24) komplementären sekundären Sensorkomponente (14),
**dadurch gekennzeichnet,**
**dass** der Verbindungskörper (5) einen Verbindungskörperkontaktabschnitt (6) aufweist, welcher bei einer Anregung des mindestens einen Messrohres (3) mit einer mechanischen Schwingung eine Auslenkung von kleiner 1 ‰, insbesondere kleiner 0,1 ‰, und bevorzugt kleiner 0,01 ‰, relativ zu einer maximalen Auslenkung des mindestens einen Messrohres (3) aufweist, und
**dass** der Anschlusskörper (2) und der Verbindungskörper (5) derart ausgestaltet sind, dass ein mechanischer Kontakt zwischen dem Anschlusskörper (2) und dem Verbindungskörper (5) ausschließlich innerhalb des Verbindungskörperkontaktabschnittes (6) erfolgt,
wobei der Anschlusskörper (2) zumindest eine erste Kontaktfläche (7) aufweist, welche in Kontakt mit dem Verbindungskörperkontaktabschnitt (6) steht,
wobei der Anschlusskörper (2) eine Erhebung (8) aufweist, welche die erste Kontaktfläche (7) umfasst oder eine Vielzahl an Erhebungen aufweist, welche jeweils eine Teilfläche der ersten Kontaktfläche (7) umfassen.

2. Modulares Coriolis-Durchflussmessgerät (1) nach Anspruch 1,
wobei die mechanische Schwingung eine Schwingfrequenz kleiner 1000 Hz und größer 100 Hz, insbesondere kleiner 750 Hz und größer 150 Hz und bevorzugt kleiner 500 Hz und größer 200 Hz aufweist.

3. Modulares Coriolis-Durchflussmessgerät (1) nach Anspruch 1 oder 2,
wobei die erste Kontaktfläche (7) einen Flächenanteil von maximal 10%, insbesondere maximal 5% und bevorzugt maximal 3% relativ zu einer gesamten Projektionsfläche annimmt, die sich aus einer Orthogonalprojektion aller Querschnittsebenen durch den Anschlusskörper auf eine Projektionsebene ergibt.

4. Modulares Coriolis-Durchflussmessgerät (1) nach mindestens einem der vorhergehenden Ansprüche,
wobei das mindestens eine Messrohr (3) gebogen ausgebildet ist,
wobei das mindestens eine Messrohr (3) einen gerade ausgebildeten Einlaufbereich (9) und einen gerade ausgebildeten Auslaufbereich (12) aufweist,
wobei der Verbindungskörper (5) zwei Verbindungskörperöffnungen (15, 16) aufweist,
wobei sich das mindestens eine Messrohr (3) im Einlaufbereich (9) und im Auslaufbereich (12) jeweils durch eine der zwei Verbindungskörperöffnungen (15, 16) erstreckt,
wobei das mindestens eine Messrohr (3) im Einlaufbereich (9) und im Auslaufbereich (12) jeweils eine Längsachse aufweist,
wobei zwei parallel zueinander verlaufende Ebenen (A, B) einen Bereich auf dem Verbindungskörper (5) eingrenzen in dem sich der Verbindungskörperkontaktabschnitt (6), insbesondere die erste Kontaktfläche (7) befindet,
wobei die Längsachsen jeweils in einer der beiden Ebenen (A, B) liegen.

5. Modulares Coriolis-Durchflussmessgerät (1) nach mindestens einem der vorhergehenden Ansprüche,
wobei der Anschlusskörper (2) eine zweite Kontaktfläche (17) aufweist, welche nur dann in Kontakt mit dem Verbindungskörperkontaktabschnitt (6) steht, wenn ein Medium, insbesondere mit einer Durchflussgeschwindigkeit von mindestens 1 m/s und/oder mit einem Mediumsdruck von grösser als 1 bar, insbesondere größer als 2 bar, durch einen Anschlusskörperkanal (18) des Anschlusskörper (2) fließt.

6. Modulares Coriolis-Durchflussmessgerät (1) nach Anspruch 5,
wobei das mindestens eine Messrohr (3) gebogen ausgebildet ist,
wobei das mindestens eine Messrohr (3) einen gerade ausgebildeten Einlaufbereich (9) und einen gerade ausgebildeten Auslaufbereich (12) aufweist,
wobei der Verbindungskörper (5) zwei Verbindungskörperöffnungen (15, 16) aufweist,
wobei sich das mindestens eine Messrohr (3) im Einlaufbereich (9) und im Auslaufbereich (12) jeweils durch eine der zwei Verbindungskörperöffnungen (15, 16) erstreckt,
wobei das mindestens eine Messrohr (3) im Einlaufbereich (9) und im Auslaufbereich (12) jeweils eine Längsachse aufweist,
wobei zwei parallel zueinander verlaufende Ebenen (A, B) einen Bereich auf dem Verbindungskörper (5) ausgrenzen in dem sich die zweite Kontaktfläche (17) befindet,
wobei die Längsachsen jeweils in einer der beiden Ebenen (A, B) liegen.

7. Modulares Coriolis-Durchflussmessgerät (1) nach mindestens einem der vorherigen Ansprüche,
wobei das Messrohrmodul (4) mindestens ein Dichtmittel (19) aufweist, welches zumindest abschnittsweise zwischen dem Anschlusskörper (2) und dem Verbindungskörper (5) angeordnet ist,
wobei das Dichtmittel (19) derart ausgestaltet ist, dass der Verbindungskörper (5) und der Anschlusskörper (2), insbesondere eine untere dem Anschlusskörper (2) zugeneigten Verbindungskörperfläche (20) und eine dem Verbindungskörper (5) zugeneigte Anschlusskörperfläche (21) zumindest abschnittsweise beabstandet sind.

8. Modulares Coriolis-Durchflussmessgerät (1) nach mindestens einem der vorherigen Ansprüche,
wobei der Anschlusskörper (2) mittels mindestens eines Befestigungsmittels (22) mit dem Verbindungskörper (5), insbesondere kraft- und/oder formschlüssig, verbunden ist,
wobei die erste Kontaktfläche (7) derart ausgebildet ist, dass sie eine Befestigungsmittelfläche (25) umschließt,
wobei durch die Befestigungsmittelfläche (25) das Befestigungsmittel (22) verläuft.

9. Modulares Coriolis-Durchflussmessgerät (1) nach mindestens einem der vorherigen Ansprüche,
wobei das Messrohrmodul (4) mindestens ein Kontaktmittel aufweist, welches zwischen dem Verbindungskörper (5) und dem Anschlusskörper (2) angeordnet ist und den mechanischen Kontakt vermittelt.

10. Modulares Coriolis-Durchflussmessgerät (1) nach mindestens einem der vorhergehenden Ansprüche,
wobei das Messrohrmodul (4) ein erstes, insbesondere gebogenes Messrohr umfasst,
wobei das Messrohrmodul (4) ein zweites, insbesondere gebogenes Messrohr umfasst,
wobei der Verbindungskörper (5) zwei Öffnungen (15, 16) aufweist durch welche sich das erste Messrohr erstreckt,
wobei der Verbindungskörper (5) zwei weitere Öffnungen (27, 28) aufweist durch welche sich das zweite Messrohr erstreckt.

11. Modulares Coriolis-Durchflussmessgerät (1) nach mindestens einem der vorhergehenden Ansprüche,
wobei der Verbindungskörper (5) einen Verbindungskörperabschnitt (29) aufweist, welcher bei der Anregung des mindestens einen Messrohres (3) mit der mechanischen Schwingung eine Auslenkung von größer 1 ‰, insbesondere größer 0,1 ‰, und bevorzugt größer 0,01 ‰, relativ zu der maximalen Auslenkung aufweist,
wobei der Anschlusskörper (2) und der Verbindungskörper (5) derart ausgestaltet sind, dass kein mechanischer Kontakt zwischen dem Anschlusskörper (2) und dem Verbindungskörper (5) innerhalb des Verbindungskörperabschnittes (29) erfolgt.

12. Verfahren zum Auslegen eines Messrohrmoduls (4) zum Einsatz in einem modularen Coriolis-Durchflussmessgerätes (1), insbesondere eines modularen Coriolis-Durchflussmessgerätes (1) nach Anspruch 1, wobei das Messrohrmodul (4) mindestens ein Messrohr (3), einen Anschlusskörper (2) zum lösbaren Verbinden des Messrohrmoduls (4) mit einer Prozessleitung und einen Verbindungskörper (5) zum Verbinden des mindestens einen Messrohres (3) mit dem Anschlusskörper (2) umfasst, umfassend die Verfahrensschritte:
- Ermitteln der Auslenkung des Verbindungskörpers (5) bei einer mechanischen Schwingung des mindestens einen Messrohres (3),
wobei die mechanische Schwingung eine Schwingfrequenz kleiner 1000 Hz und größer 100 Hz, insbesondere kleiner 750 Hz und größer 150 Hz und bevorzugt kleiner 500 Hz und größer 200 Hz aufweist;
- Ermitteln eines Verbindungskörperkontaktabschnittes (6), bei dem die Auslenkung des Verbindungskörpers (5) im Verbindungskörperkontaktabschnitt (6) kleiner 1 ‰, insbesondere kleiner 0,1 ‰, und bevorzugt kleiner 0,01 ‰, relativ zu einer maximalen Auslenkung des mindestens einen Messrohres (3) ist; und
- Verbinden des Anschlusskörpers (2) mit dem Verbindungskörper (5) und dem mindestens einen Messrohr (3) derart, dass ein mechanischer Kontakt zwischen dem Anschlusskörper (2) und dem Verbindungskörper (5) ausschließlich innerhalb des Verbindungskörperkontaktabschnittes (6) erfolgt.

13. Verfahren nach Anspruch 12,
wobei für das Ermitteln der Auslenkung des Verbindungskörpers (5) das Messrohrmodul (3) in einer Aufnahme eines Trägermoduls des Coriolis-Durchflussmessgerätes angeordnet ist.

14. Verfahren nach Anspruch 13,
wobei für das Ermitteln der Auslenkung des Verbindungskörpers (5) eine definierte Vorspannkraft auf das Messrohrmodul (3), insbesondere auf den Verbindungskörper (5) aufgeprägt ist, und/oder
wobei das Ermitteln der Auslenkung des Verbindungskörpers (5) für ein Messrohrmodul (3) ohne Anschlusskörper (2) erfolgt.

15. Verfahren nach mindestens einem der Ansprüche 12 bis 14,
wobei das Ermitteln der Auslenkung des Verbindungskörpers (5) mittels eines Simulationsverfahrens, insbesondere mittels Finite-Elemente Berechnungen erfolgt.

## Claims

1. A modular Coriolis flowmeter (1) for determining a process variable of a flowable medium, comprising:
- A measuring tube module (4), comprising:
- At least one measuring tube (3) for conducting the medium;
- A primary excitation component (23);
- A primary sensor component (24);
- A connecting body (2) for establishing a separable connection between the measuring tube module (4) and a process line;
- A union body (5) for connecting the at least one measuring tube (3) to the connecting body (2),
wherein the union body (5) is connected to the at least one measuring tube (3), in particular by means of a permanent material bond;
- A support module (10), comprising:
- A mount (11) for attaching the measuring tube module (4) in the support module (10) in such a way that it can be detached again,
- A secondary excitation component (13) to complement the primary excitation component (23),
- A secondary sensor component (14) to complement the primary sensor component (24),
**characterized in that**
the union body (5) has a union body contact section (6) which has a deflection of less than 1‰, in particular less than 0.1‰, and preferably less than 0.01‰, relative to a maximum deflection of the at least one measuring tube (3) when the at least one measuring tube (3) is caused to mechanically oscillate, and
the connecting body (2) and the union body (5) are configured in such a way that there is only mechanical contact between the connecting body (2) and the union body (5) inside the union body contact section (6),
wherein the connecting body (2) has at least one first contact surface (7) which is in contact with the union body contact section (6),
wherein the connecting body (2) has a raised section (8) which comprises the first contact surface (7) or has a multitude of raised sections, each of which comprises a partial surface of the first contact surface (7).

2. The modular Coriolis flowmeter (1) as claimed in claim 1,
wherein the mechanical oscillation has an oscillation frequency less than 1000 Hz and greater than 100 Hz, in particular less than 750 Hz and greater than 150 Hz, and preferably less than 500 Hz and greater than 200 Hz.

3. The modular Coriolis flowmeter (1) as claimed in claim 1 or 2,
wherein the first contact surface (7) makes up a surface proportion of at most 10%, in particular at most 5%, and preferably at most 3%, relative to a total projection surface which is the result of an orthogonal projection of all cross-sectional planes through the connecting body on one projection plane.

4. The modular Coriolis flowmeter (1) as claimed in at least one of the preceding claims,
wherein the at least one measuring tube (3) is curved,
wherein the at least one measuring tube (3) has a straight inlet area (9) and a straight outlet area (12),
wherein the union body (5) has two union body openings (15, 16),
wherein the at least one measuring tube (3) passes through one of the two union body openings (15, 16) in the inlet area (9) and in the outlet area (12),
wherein the at least one measuring tube (3) has a longitudinal axis in both the inlet area (9) and the outlet area (12),
wherein two planes (A, B) which run parallel to each other enclose an area on the union body (5) in which the union body contact section (6), in particular the first contact surface (7), is located,
wherein each longitudinal axis is located in one of the two planes (A, B).

5. The modular Coriolis flowmeter (1) as claimed in at least one of the preceding claims,
wherein the connecting body (2) has a second contact surface (17) which is only in contact with the union body contact section (6) when a medium is flowing through a connecting body channel (18) of the connecting body (2), in particular at a flow velocity of at least 1 m/s and/or at a medium pressure of greater than 1 bar, in particular greater than 2 bar.

6. The modular Coriolis flowmeter (1) as claimed in claim 5,
wherein the at least one measuring tube (3) is curved,
wherein the at least one measuring tube (3) has a straight inlet area (9) and a straight outlet area (12),
wherein the union body (5) has two union body openings (15, 16),
wherein the at least one measuring tube (3) passes through one of the two union body openings (15, 16) in the inlet area (9) and in the outlet area (12),
wherein the at least one measuring tube (3) has a longitudinal axis in both the inlet area (9) and the outlet area (12),
wherein two planes (A, B) which run parallel to each other exclude an area on the union body (5) in which the second contact surface (17) is located,
wherein each longitudinal axis is located in one of the two planes (A, B).

7. The modular Coriolis flowmeter (1) as claimed in at least one of the preceding claims,
wherein the measuring tube module (4) has at least one sealing piece (19) which is arranged at least in sections between the connecting body (2) and the union body (5),
wherein the sealing piece (19) is configured in such a way that the union body (5) and the connecting body (2), in particular a lower union body surface (20) facing toward the connecting body (2) and a connecting body surface (21) facing toward the union body (5), are spaced apart from each other at least in sections.

8. The modular Coriolis flowmeter (1) as claimed in at least one of the preceding claims,
wherein the connecting body (2) is connected to the union body (5), in particular by means of a frictional and/or positive-locking connection, using at least one fixing (22),
wherein the first contact surface (7) is configured in such a way that it encloses a fixing surface (25),
wherein the fixing (22) passes through the fixing surface (25).

9. The modular Coriolis flowmeter (1) as claimed in at least one of the preceding claims,
wherein the measuring tube module (4) has at least one contact piece which is arranged between the union body (5) and the connecting body (2) and establishes the mechanical contact.

10. The modular Coriolis flowmeter (1) as claimed in at least one of the preceding claims,
wherein the measuring tube module (4) comprises a first, in particular curved, measuring tube,
wherein the measuring tube module (4) comprises a second, in particular curved, measuring tube,
wherein the union body (5) has two openings (15, 16) through which the first measuring tube passes,
wherein the union body (5) has two more openings (27, 28) through which the second measuring tube passes.

11. The modular Coriolis flowmeter (1) as claimed in at least one of the preceding claims,
wherein the union body (5) has a union body section (29) which has a deflection of greater than 1‰, in particular greater than 0.1‰, and preferably greater than 0.01‰, relative to the maximum deflection when the at least one measuring tube (3) is caused to mechanically oscillate,
wherein the connecting body (2) and the union body (5) are configured in such a way that there is no mechanical contact between the connecting body (2) and the union body (5) inside the union body section (29).

12. A method for designing a measuring tube module (4) for use in a modular Coriolis flowmeter (1), in particular a modular Coriolis flowmeter (1) as claimed in claim 1,
wherein the measuring tube module (4) comprises at least one measuring tube (3), one connecting body (2) for establishing a separable connection between the measuring tube module (4) and a process line, and a union body (5) for connecting the at least one measuring tube (3) to the connecting body (2), comprising the process steps of:
- Determining the deflection of the union body (5) when the at least one measuring tube (3) is mechanically oscillating,
wherein the mechanical oscillation has an oscillation frequency less than 1000 Hz and greater than 100 Hz, in particular less than 750 Hz and greater than 150 Hz, and preferably less than 500 Hz and greater than 200 Hz;
- Determining a union body contact section (6) where the deflection of the union body (5) in the union body contact section (6) is less than 1‰, in particular less than 0.1‰, and preferably less than 0.01‰, relative to a maximum deflection of the at least one measuring tube (3); and
- Connecting the connecting body (2) to the union body (5) and the at least one measuring tube (3) in such a way that there is only mechanical contact between the connecting body (2) and the union body (5) inside the union body contact section (6).

13. The method as claimed in claim 12,
wherein the measuring tube module (3) is arranged in a mount on the support module of the Coriolis flowmeter in order to determine the deflection of the union body (5).

14. The method as claimed in claim 13,
wherein a defined preload force is exerted on the measuring tube module (3), in particular on the union body (5), in order to determine the deflection of the union body (5), and/or
wherein the deflection of the union body (5) is determined for a measuring tube module (3) without a connecting body (2).

15. The method as claimed in at least one of claims 12 to 14,
wherein the deflection of the union body (5) is determined by means of a simulation process, in particular by means of finite element calculations.

## Revendications

1. Débitmètre Coriolis modulaire (1) destiné à la détermination d'une grandeur de process d'un produit fluide, lequel débitmètre comprend:
- un module de tube de mesure (4), comprenant :
- au moins un tube de mesure (3) destiné à guider le produit ;
- un composant d'excitation primaire (23) ;
- un composant capteur primaire (24) ;
- un corps de raccordement (2) destiné à relier de manière amovible le module de tube de mesure (4) à une conduite de process ;
- un corps de liaison (5) destiné à relier l'au moins un tube de mesure (3) au corps de raccordement (2),
le corps de liaison (5) étant relié à l'au moins un tube de mesure (3), notamment par adhérence ;
- un module de support (10), comprenant :
- un logement (11) destiné à la fixation amovible du module de tube de mesure (4) dans le module de support (10),
- un composant d'excitation secondaire (13) complémentaire du composant d'excitation primaire (23),
- un composant capteur secondaire (14) complémentaire du composant capteur primaire (24),
**caractérisé**
**en ce que** le corps de liaison (5) comporte une partie de contact de corps de liaison (6) qui, lors de l'excitation de l'au moins un tube de mesure (3) par une vibration mécanique, présente une déviation inférieure à 1 ‰, notamment inférieure à 0,1 ‰, et de préférence inférieure à 0,01 ‰, par rapport à une déviation maximale de l'au moins un tube de mesure (3), et
**en ce que** le corps de raccordement (2) et le corps de liaison (5) sont conçus de telle sorte qu'un contact mécanique entre le corps de raccordement (2) et le corps de liaison (5) s'établisse exclusivement à l'intérieur de la partie de contact de corps de liaison (6),
le corps de raccordement (2) comportant au moins une première surface de contact (7), laquelle est en contact avec la partie de contact de corps de liaison (6),
le corps de raccordement (2) comportant une saillie (8), laquelle englobe la première surface de contact (7) ou le corps de raccordement comportant une pluralité de saillies, lesquelles englobent chacune une surface partielle de la première surface de contact (7).

2. Débitmètre Coriolis modulaire (1) selon la revendication 1,
pour lequel la vibration mécanique présente une fréquence de vibration inférieure à 1 000 Hz et supérieure à 100 Hz, notamment inférieure à 750 Hz et supérieure à 150 Hz, et de préférence inférieure à 500 Hz et supérieure à 200 Hz.

3. Débitmètre Coriolis modulaire (1) selon la revendication 1 ou 2,
pour lequel la première surface de contact (7) occupe une proportion maximale de 10 %, notamment de 5 % et de préférence de 3 %, par rapport à une surface de projection totale résultant de la projection orthogonale de tous les plans de section transversale traversant le corps de raccordement sur un plan de projection.

4. Débitmètre Coriolis modulaire (1) selon au moins l'une des revendications précédentes,
pour lequel l'au moins un tube de mesure (3) est courbé,
pour lequel l'au moins un tube de mesure (3) présente une zone d'entrée (9) rectiligne et une zone de sortie (12) rectiligne,
pour lequel le corps de liaison (5) comporte deux ouvertures de corps de liaison (15, 16),
pour lequel l'au moins un tube de mesure (3) s'étend, dans la zone d'entrée (9) et dans la zone de sortie (12), respectivement à travers l'une des deux ouvertures de corps de liaison (15, 16),
pour lequel l'au moins un tube de mesure (3) présente respectivement un axe longitudinal dans la zone d'entrée (9) et dans la zone de sortie (12),
pour lequel deux plans (A, B) parallèles entre eux délimitent une zone sur le corps de liaison (5), zone dans laquelle se trouve la partie de contact de corps de liaison (6), notamment la première surface de contact (7),
pour lequel les axes longitudinaux se situent respectivement dans l'un des deux plans (A, B).

5. Débitmètre Coriolis modulaire (1) selon au moins l'une des revendications précédentes,
pour lequel le corps de raccordement (2) comporte une deuxième surface de contact (17), laquelle n'est en contact avec la partie de contact de corps de liaison (6) que lorsqu'un produit, notamment avec une vitesse d'écoulement d'au moins 1 m/s et/ou une pression supérieure à 1 bar, notamment supérieure à 2 bar, s'écoule à travers un canal (18) du corps de raccordement (2).

6. Débitmètre Coriolis modulaire (1) selon la revendication 5,
pour lequel l'au moins un tube de mesure (3) est courbé,
pour lequel l'au moins un tube de mesure (3) comprend une zone d'entrée (9) rectiligne et une zone de sortie (12) rectiligne,
pour lequel le corps de liaison (5) présente deux ouvertures de corps de liaison (15, 16),
pour lequel l'au moins un tube de mesure (3) s'étend, dans la zone d'entrée (9) et dans la zone de sortie (12), respectivement à travers l'une des deux ouvertures de corps de liaison (15, 16),
pour lequel l'au moins un tube de mesure (3) présente respectivement un axe longitudinal dans la zone d'entrée (9) et dans la zone de sortie (12),
pour lequel deux plans (A, B) parallèles l'un à l'autre délimitent une zone sur le corps de liaison (5), zone dans laquelle se trouve la deuxième surface de contact (17),
pour lequel les axes longitudinaux se situent respectivement dans l'un des deux plans (A, B).

7. Débitmètre Coriolis modulaire (1) selon au moins l'une des revendications précédentes,
pour lequel le module de tube de mesure (4) comporte au moins un moyen d'étanchéité (19), lequel est disposé, au moins par sections, entre le corps de raccordement (2) et le corps de liaison (5),
pour lequel le moyen d'étanchéité (19) est conçu de telle sorte que le corps de liaison (5) et le corps de raccordement (2) - notamment une surface de corps de liaison (20), située en bas et inclinée vers le corps de raccordement (2), et une surface de corps de raccordement (21), inclinée vers le corps de liaison (5) - soient espacés au moins par sections.

8. Débitmètre Coriolis modulaire (1) selon au moins l'une des revendications précédentes,
pour lequel le corps de raccordement (2) est relié au corps de liaison (5) à l'aide d'au moins un moyen de fixation (22), notamment par adhérence et/ou par emboîtement,
pour lequel la première surface de contact (7) est conçue de manière à englober une surface de moyen de fixation (25),
pour lequel le moyen de fixation (22) traverse ladite surface de moyen de fixation (25).

9. Débitmètre Coriolis modulaire (1) selon au moins l'une des revendications précédentes,
pour lequel le module de tube de mesure (4) comporte au moins un moyen de contact, lequel moyen de contact est disposé entre le corps de liaison (5) et le corps de raccordement (2) et lequel moyen de contact assure le contact mécanique.

10. Débitmètre Coriolis modulaire (1) selon au moins l'une des revendications précédentes,
pour lequel le module de tube de mesure (4) comprend un premier tube de mesure, notamment courbé,
pour lequel le module de tube de mesure (4) comprend un deuxième tube de mesure, notamment courbé,
pour lequel le corps de liaison (5) comporte deux ouvertures (15, 16) à travers lesquelles s'étend le premier tube de mesure,
pour lequel le corps de liaison (5) comporte deux autres ouvertures (27, 28) à travers lesquelles s'étend le deuxième tube de mesure.

11. Débitmètre Coriolis modulaire (1) selon au moins l'une des revendications précédentes,
pour lequel le corps de liaison (5) comporte généralement une partie de corps de liaison (29) qui, lors de l'excitation de l'au moins un tube de mesure (3) avec la vibration mécanique, présente une déviation supérieure à 1 ‰, notamment supérieure à 0,1 ‰, et de préférence supérieure à 0,01 ‰, par rapport à la déviation maximale,
le corps de raccordement (2) et le corps de liaison (5) étant conçus de telle sorte qu'aucun contact mécanique ne se produise entre le corps de raccordement (2) et le corps de liaison (5) à l'intérieur de la partie de corps de liaison (29).

12. Procédé de conception d'un module de tube de mesure (4) destiné à être utilisé dans un débitmètre Coriolis modulaire (1), notamment un débitmètre Coriolis modulaire (1) selon la revendication 1, le module de tube de mesure (4) comprenant au moins un tube de mesure (3), un corps de raccordement (2) destiné à relier de manière amovible le module de tube de mesure (4) à une conduite de process, et un corps de liaison (5) destiné à relier l'au moins un tube de mesure (3) au corps de raccordement (2), lequel procédé comprend les étapes suivantes :
- Détermination de la déviation du corps de liaison (5) lors d'une vibration mécanique de l'au moins un tube de mesure (3),
la vibration mécanique présentant une fréquence de vibration inférieure à 1 000 Hz et supérieure à 100 Hz, notamment inférieure à 750 Hz et supérieure à 150 Hz, et de préférence inférieure à 500 Hz et supérieure à 200 Hz ;
- Détermination d'une partie de contact de corps de liaison (6), pour laquelle la déviation du corps de liaison (5) au niveau de la partie de contact de corps de liaison (6) est inférieure à 1 ‰, notamment inférieure à 0,1 ‰, et de préférence inférieure à 0,01 ‰, par rapport à une déviation maximale de l'au moins un tube de mesure (3) ; et
- Liaison du corps de raccordement (2) au corps de liaison (5) et à l'au moins un tube de mesure (3) de telle sorte qu'un contact mécanique entre le corps de raccordement (2) et le corps de liaison (5) s'établisse exclusivement à l'intérieur de la partie de contact de corps de liaison (6).

13. Procédé selon la revendication 12,
pour lequel le module de tube de mesure (3) est placé dans un logement d'un module support du débitmètre Coriolis afin de déterminer la déviation du corps de liaison (5).

14. Procédé selon la revendication 13,
pour lequel, pour déterminer la déviation du corps de liaison (5), une force de précontrainte définie est appliquée au module de tube de mesure (3), notamment au corps de liaison (5), et/ou
pour lequel la détermination de la déviation du corps de liaison (5) s'effectue pour un module de tube de mesure (3) sans corps de raccordement (2).

15. Procédé selon au moins l'une des revendications 12 à 14,
pour lequel la détermination de la déviation du corps de liaison (5) s'effectue au moyen d'une méthode de simulation, notamment au moyen de calculs par éléments finis.
